# EUROPEAN PATENT APPLICATION

(11) **EP 4 497 995 A1**
(43) Date of publication of application: **29.01.2025**
(21) Application number: 23187295.3
(22) Date of filing: 24.07.2023
(51) Int. Cl.: F21S 41/675, G02B 26/08

(54) **POINTING ASSEMBLY, LASER COMMUNICATION ASSEMBLY, OBSERVATION ASSEMBLY, VEHICLE OR STATION, AND USE**

(71) Applicant: Nederlandse Organisatie voor toegepast-natuurwetenschappelijk Onderzoek TNO, 2595 DA 's-Gravenhage (NL)
(72) Inventor: VAN KEMPEN, Floris Clemens Maria, 2595 DA 's-Gravenhage (NL); DE BRUIJN,Dick, 2595 DA 's-Gravenhage (NL)
(74) Representative: V.O.

(57) **Abstract**

Pointing assembly for controllably directing a light beam into and/or out from a vehicle or station between a first optical axis segment and a second optical axis segment, the second optical axis segment mainly extending external to the vehicle or station and being controllably variable with respect to the first optical axis segment, wherein the pointing assembly comprises a rotatable mirror arrangement for directing the light beam, the mirror arrangement having a first mirror and a second mirror mutually spaced apart along an intermediate optical axis segment between the first and second optical axis segments, wherein the pointing assembly is at least selectively configured to cause at least one change in convergence or divergence of the light beam using at least one of: the first mirror, the second mirror, an optional lens in the intermediate optical axis segment and an optional lens in the second optical axis segment.

## Description

### FIELD

The invention relates to a pointing assembly for controllably directing a light beam into and/or out from a vehicle or station between a first optical axis segment and a second optical axis segment, the second optical axis segment mainly extending external to the vehicle or station and being controllably variable with respect to the first optical axis segment. The invention further relates to: a laser communication assembly comprising the pointing assembly; an observation assembly comprising the pointing assembly; a vehicle or station comprising the laser communication assembly and/or the observation assembly; and use of the pointing assembly.

### BACKGROUND

Vehicles such as satellites, and stations such as ground stations, are known for various purposes, for example for laser communication in a satellite laser communication system, or for observation such as telescopic observation. In such applications, it is known to provide the vehicle or station with a so-called pointing assembly for controllably directing a light beam into and/or out from the vehicle or station. A known pointing assembly is configured to direct such a light beam between a first optical axis segment and a second optical axis segment, the second optical axis segment mainly extending external to the vehicle or station and being controllably variable with respect to the first optical axis segment. The first optical axis segment may extend mainly internal to the vehicle or station and may be fixedly arranged with respect to a base formed by a main body of the vehicle or station.

In case of laser communication, a laser beam as light beam may travel outward from or inward to the vehicle or station. In case of bidirectional communication, or for example in case a beacon is lit to help with tracking, both inward and outward light beams may occur. In case of observation, light to be observed generally travels inward to the vehicle or station, forming a light beam e.g. due to an aperture where the light enters the vehicle or station. Even though such an incoming light beam may be properly formed as a beam essentially only when entering the vehicle or station, part of the same light beam may at least conceptually be considered to extend outside the vehicle or station, originating from a so-called field of view outside the vehicle or station and being directed towards the vehicle or station.

An outgoing light beam may be generated within the vehicle or station. An incoming light beam may be subject to sensing thereof within the vehicle or station. Before being sensed or after being generated, the light beam may be processed in the vehicle or station, for example with further optics, typically arranged in the aforementioned main body. Such processing may include expanding or narrowing a beam width of the light beam, for example in case of a substantially collimated laser beam, and/or changing a convergence or divergence of the light beam, for example as part of a telescope arrangement.

In some cases, an overall optical pointing function of the vehicle or station is jointly provided by a pointing assembly as described above, and a further pointing assembly more internal to the vehicle or station. In such cases, one of the pointing assemblies, e.g. a so-called fine pointing assembly, may have a higher precision, while the other pointing assembly, e.g. a so-called coarse pointing assembly, may have a larger range of possible light beam directions. The higher-precision pointing assembly is then typically arranged more internal to the vehicle or station compared to the lowerprecision or 'coarse' pointing assembly. With respect to the light beam, the coarse pointing assembly then typically provides the most externally arranged optical part of the vehicle or station.

### SUMMARY

An object of the present invention is to make vehicles and/or stations comprising a laser communication and/or observation assembly more compact and/or lower in mass and/or reduced in the number of their components and/or more economical, in particular while retaining or expanding their optical functionality.

To that end, an aspect of the invention provides a pointing assembly for controllably directing a light beam into and/or out from a vehicle or station between a first optical axis segment and a second optical axis segment. The second optical axis segment mainly extends external to the vehicle or station and is controllably variable with respect to the first optical axis segment.

The pointing assembly comprises a mirror arrangement for directing the light beam, the mirror arrangement having a first mirror and a second mirror mutually spaced apart along an intermediate optical axis segment.

The first mirror connects the intermediate optical axis segment with the first optical axis segment. The second mirror connects the intermediate optical axis segment with the second optical axis segment. The first mirror and the second mirror are each angled with respect to the intermediate optical axis segment so that each of the first and second optical axis segments is substantially transverse to the intermediate optical axis segment.

The pointing assembly is mountable, e.g. mounted, on a base of the vehicle or station such that the first mirror and the second mirror are together controllably rotatable with respect to the base about a first rotation axis substantially coinciding with the first optical axis segment, so as to enable control of a direction of the intermediate optical axis segment with respect to the base.

The second mirror is controllably rotatable with respect to the first mirror about a second rotation axis substantially coinciding with the intermediate optical axis segment, so as to enable control of a direction of the second optical axis segment with respect to the first mirror.

In the present context, the term optical axis segment may be understood as a segment of an optical axis. Typically, an optical axis may follow different subsequent directions, e.g. due to redirection by one or more mirrors or other redirecting elements, wherein subsequent optical axis segments may correspond to the subsequent directions. Typically, where an optical axis comprises multiple optical axis segments, an optical axis segment is thus bound at one or two ends of the segment by a redirecting optical element such as a mirror, arranged at a boundary between adjacent optical axis segments of a same optical axis, thereby interconnecting the adjacent optical axis segments.

It shall be appreciated that, where a rotation axis substantially coincides with an optical axis segment, small misalignments between the rotation axis and the optical axis segment may be permissible, provided that these do not lead to any major distortion or breaking up of the optical axis comprising the optical axis segment upon rotation about the rotation axis. It shall be appreciated that a size of a corresponding maximally acceptable misalignment will generally depend on various other dimensions such as length of the optical axis segment and transverse geometries of optical elements. In any case, where in the present context a rotation axis substantially coincides with an optical axis segment, the rotation axis and the optical axis segment are preferably parallel and close together in radial direction, in particular much closer together than a maximum possible beam width along the optical axis segment, for example spaced apart by a radial distance corresponding to at most 10%, 5%, 2% or 1% of said maximum possible beam width.

The pointing assembly according to the present invention is at least selectively configured to cause at least one change in convergence or divergence of the light beam using, in particular as one or more beam shaping elements, at least one of: the first mirror, the second mirror, an optional lens in the intermediate optical axis segment and an optional lens in the second optical axis segment.

By contrast, known pointing assemblies of the type comprising such a mirror arrangement as such are not configured to cause any change in convergence of divergence of the light beam as it travels through the pointing assembly. Rather, such pointing assemblies are configured to maintain any such convergence or divergence or absence thereof, in particular by having flat mirrors as the first and second mirrors, and by being free from lenses in the path of the light beam. If any change of convergence or divergence is needed, this then requires a separate optics arrangement, typically deeper in the vehicle or station.

By configuring the pointing assembly itself to cause a change in the convergence or divergence, such a separate optics arrangement may thus be obviated or at least simplified or reduced in size and/or mass and/or number of components, allowing the respective vehicle or station to be more compact and/or lower in mass and/or less expensive to manufacture.

Causing at least one change in convergence or divergence of the light beam can serve various purposes.

As one example, in the context of telescopic observation, changes in convergence or divergence of the light beam may provide or contribute to an image magnification, for example in an optical telescope arrangement.

As another example, in the context of laser communication, an initially substantially collimated laser beam may be caused to diverge and subsequently become collimated again, so as to increase a beam width of the beam with little or no net loss of collimation level. Here, the term collimation level may be understood as a degree to which light rays of the beam are mutually parallel, in particular irrespective of the beam width. An arrangement providing such an increase of beam width may be referred to as a beam expander. Such beam expansion may be desired or needed in the context of laser communication, in particular to produce a relatively wide collimated beam going out from the vehicle or station. Similarly, for a laser beam coming into the vehicle or station, a reduction in the beam width is typically desired, which may then be realized by a same or similar optics arrangement as the described beam expander, now acting as a so-called `reverse beam expander' or `beam minimizer'.

Beam expansion or reduction may be desired for various reasons, including but not limited to the following. First, it may be considered that a narrow beam naturally diverges due to diffraction limits, faster than a wide beam. Therefore, to keep de beam spread as small as possible at the destination, it may be advantageous to expand the beam. Second, beam expansion may also help to receive more light from a wide beam. Third, for high power laser, it may be advantageous to vary laser power density (which may damage optics) without changing the total power. Fourth, on the terminal side, a narrow beam may reduce the necessary size of optics and may thereby help to reduce the system's size.

For such and further similar purposes, the present pointing assembly can provide part or all of the required change or changes in convergence or divergence of the light beam. The pointing assembly can advantageously combine such changing in convergence or divergence with its pointing function, i.e. its function of controllably adjusting the direction of the second optical axis segment with respect to the first optical axis segment, in a single assembly. Such a function combination at the pointing assembly may advantageously allow part or all of a traditional further optics arrangement to be omitted from the vehicle or station, which may therefore be more compact and/or lower in mass and/or reduced in its number of components. This holds despite the possibility that the additional functionality of the pointing assembly may in some cases add some size or mass to the design of the pointing assembly, for example, because the overall size and mass of the respective vehicle or station can still be reduced in view of part or all of a traditional further optics arrangement being obviated.

It shall be appreciated that in the present context, when the pointing assembly is configured to cause at least one change in convergence or divergence of the light beam, the light beam may still have the same convergence or divergence or absence thereof going out from the pointing assembly compared to going into the pointing assembly. This is because the at least one change in convergence or divergence may comprise multiple changes in convergence or divergence, wherein the combination of changes may then correspond to no net change in convergence or divergence. Meanwhile, the same combination of changes may still have other effects, for example increasing or reducing a beam width of a laser beam, as described above.

A further aspect provides a laser communication assembly for a vehicle or station serving as a laser communication terminal, comprising a pointing assembly as described herein, in particular for directing a laser beam going out from or into the laser communication assembly for communication with a remote further laser communication terminal.

Such a laser communication assembly provides above described advantages, in particular in the context of laser communication such as in a satellite laser communication system.

A further aspect provides an observation assembly for a vehicle or station serving as an observation unit, comprising a pointing assembly as described herein, in particular for directing a light beam into the observation assembly for optical observation.

Such an observation assembly provides above described advantages, in particular in the context of observation such as optical telescopic observation. As alluded to above, in such a scenario, the light beam may be considered as originating from a field of view of the observation unit, extending from said field of view towards the observation assembly, and being formed into a proper beam e.g. upon entering the observation assembly through an aperture. Typically, such a light beam converges in the direction from the field of view towards the observation assembly, corresponding to the field of view being wider than the aperture.

A further aspect provides a vehicle or station comprising a laser communication assembly as described herein and/or an observation assembly as described herein.

Such a vehicle or station provides above described advantages.

A further aspect provides a use of a pointing assembly as described herein for controllably directing a light beam into and/or out from a vehicle or station, for example a vehicle or station as described herein, in particular for laser communication and/or for observation.

Such a use provides above described advantages.

Optional advantageous elaborations of the above described aspects are provided by the features of the dependent claims, as explained further in the below detailed description.

### DETAILED DESCRIPTION

In the following, the invention will be explained further using examples of embodiments and drawings. The drawings are schematic and merely show examples. In the drawings, corresponding elements have been provided with corresponding reference signs. In the drawings:
Fig. 1 shows a perspective view of a known pointing assembly;
Fig. 2 shows a cross sectional view of a possible pointing assembly of the type shown in Fig. 1;
Figs. 3 to 6 each show a cross sectional view of a pointing assembly according to a respective embodiment;
Fig. 7 shows a side view of a laser communication system comprising vehicles and a station each comprising at least one laser communication assembly; and
Fig. 8 shows a side view of a vehicle and a station each comprising an observation assembly.

Although possible embodiments are described herein with references to the drawings, such descriptions of embodiments may generally also be understood without consulting the drawings, which in any case merely show illustrative examples of such embodiments.

The figures show examples of a pointing assembly 1 for controllably directing a light beam 2 into and/or out from a vehicle 3 or station 4 between a first optical axis segment X1 and a second optical axis segment X2, the second optical axis segment X2 mainly extending external to the vehicle 3 or station 4 and being controllably variable with respect to the first optical axis segment X1.

The pointing assembly 1 comprises a mirror arrangement 5 for directing the light beam 2, in particular along a controllably adjustable periscope-like or zig-zag optical path. The mirror arrangement 5 has a first mirror 6 and a second mirror 7 mutually spaced apart along an intermediate optical axis segment Y.

The first mirror 6 connects the intermediate optical axis segment Y with the first optical axis segment X1. The second mirror 7 connects the intermediate optical axis segment Y with the second optical axis segment X2. The first mirror 6 and the second mirror 7 are each angled with respect to the intermediate optical axis segment Y so that each of the first and second optical axis segments X1, X2 is substantially transverse to the intermediate optical axis segment Y.

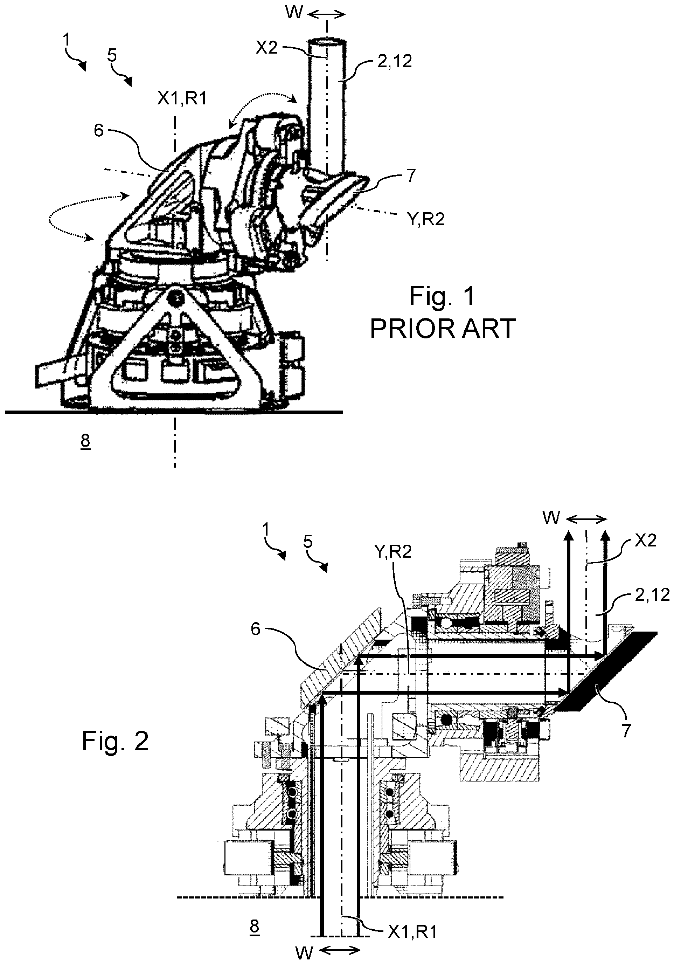

Reflective faces of the mirrors 6,7 preferably extend at angles of about 45 degrees to the optical axis segments X1, Y and X2, forming a substantially right-angled periscope-like or zig-zag optical path, or segmented optical axis, along said subsequent optical axis segments, at least in one or some possible orientations, e.g. a default orientation, of the second mirror 7 with respect to the first mirror 6, such as the relative orientation shown in Figs. 1-6.

The pointing assembly 1 is mountable on a base 8 of the vehicle 3 or station 4 such that the first mirror 6 and the second mirror 7 are together controllably rotatable with respect to the base 8 about a first rotation axis R1 substantially coinciding with the first optical axis segment X1, so as to enable control of a direction of the intermediate optical axis segment Y with respect to the base 8.

The second mirror 7 is controllably rotatable with respect to the first mirror 6 about a second rotation axis R2 substantially coinciding with the intermediate optical axis segment Y, so as to enable control of a direction of the second optical axis segment X2 with respect to the first mirror 6.

In the shown examples, the first rotation axis R1 coincides with the first optical axis segment X1 and is thus indicated by a same line segment. Similarly, in the shown examples, the second rotation axis R2 coincides with the intermediate optical axis segment Y and is thus indicated by a same line segment. Nevertheless, as explained in the summary section, a small misalignment between a rotation axis and an optical axis segment may be permissible.

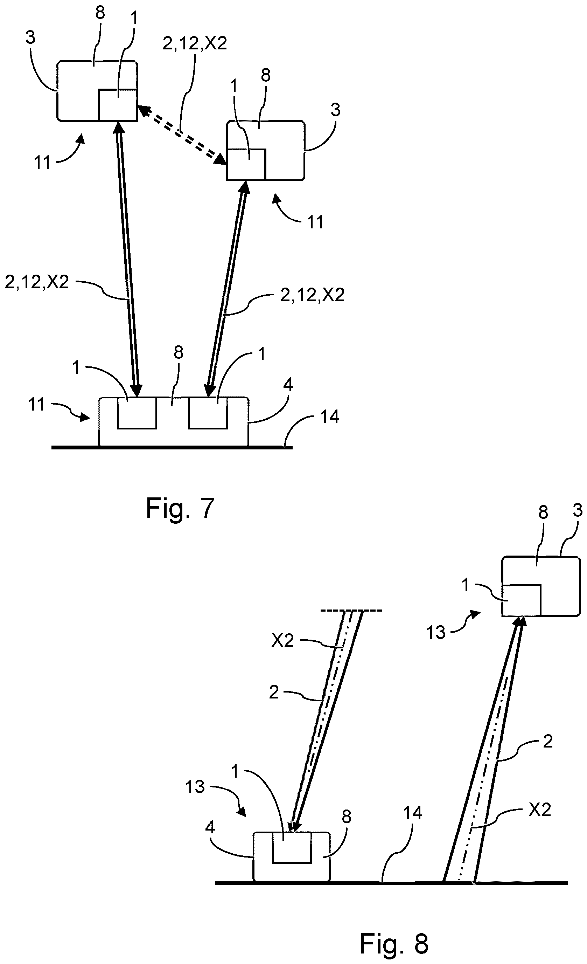

With reference to Fig. 7, a laser communication assembly 11 for a vehicle 3 or station 4 serving as a laser communication terminal may comprise a pointing assembly 1 as described herein, in particular for directing a laser beam 12 going out from or into the laser communication assembly 11 for communication with a remote further laser communication terminal.

Merely as one example, Fig. 7 shows a ground station as a station 4 and two satellites or aircraft as vehicles 3, each serving as a laser communication terminal, e.g. in a laser communication system. Here, each of the vehicles 3 communicates with the station 4 using one or more respective laser beams 12 as light beams 2, in particular along straight paths corresponding to second optical axis segments X2 of both the vehicle 3 and the station 4. Here, the station 4 is shown as comprising two pointing assemblies 1, while the vehicles are each shown as comprising a single pointing assembly. However, it shall be appreciated that a station or vehicle may generally comprise any positive number of pointing assemblies. Although laser beams 12 in Fig. 7 are shown as bidirectional arrows, it shall be appreciated that each individual laser beam is typically unidirectional and that the communication via the laser beams 12 may generally be unidirectional (e.g. space to ground or vice versa), or bidirectional (e.g. using multiple simultaneous and/or non-simultaneous laser beams). Furthermore, it shall be appreciated that the laser beams 12 will generally not be perfectly collimated along their entire length, in particular due to the diffraction limit.

Alternatively or additionally to vehicles 3 communicating with a station 4, as indicated by the solid-line double arrows 2,12,X2 in Fig. 7, one or more of such or similar vehicles may communicate with or to each other and/or with or to one or more other vehicles using such or similar laser beams, as indicated by the dotted-line double arrow 2,12,X2 in Fig. 7.

With reference to Fig. 8, an observation assembly 13 for a vehicle 3 or station 4 serving as an observation unit may comprise a pointing assembly 1 as described herein, in particular for directing a light beam 2 into the observation assembly 13 for optical observation.

Merely as one example, Fig. 8 shows a ground station as a station 4 and a satellite or aircraft as a vehicle 3, each serving as an observation unit. Here, the station 4 receives light from a field of view substantially above the station, the light being received as a light beam 2 due to passing through an aperture of the station 4. The shown vehicle 3 receives light from a field of view substantially below the vehicle, here on the ground 14, the light similarly being received as a light beam 2.

With reference to Figs. 7 and 8, a vehicle 3 or station 4 may comprise such a laser communication assembly 11 and/or such an observation assembly 13. In some cases, a same vehicle or station may thus serve both as a laser communication terminal and an observation unit, e.g. using a same pointing assembly or different pointing assemblies for each function.

The vehicle may e.g. be a space vehicle such as a satellite, an air vehicle such as an aircraft, a ground vehicle such as a road vehicle or rail vehicle, or a water vehicle such as a ship. The station may e.g. be a space station or a ground station. In some scenarios, a vehicle may at least temporarily act as a station when being substantially stationary, e.g. on the ground or in an orbit. Thus, the vehicle 3 or station 4 may be at least one of a satellite, an aircraft, a spacecraft, a ground based vehicle, a space station and a ground station.

A pointing assembly 1 as described herein may thus be used for controllably directing a light beam 2 into and/or out from a vehicle 3 or station 4, in particular for laser communication and/or for observation.

The pointing assembly 1 may be arranged as a coarse pointing assembly, wherein preferably the vehicle 3 or station 4 additionally comprises a fine pointing assembly (not shown).

In this way, an overall pointing function can advantageously be distributed between the coarse pointing assembly and a typically smaller fine pointing assembly or other additional optical arrangement. The coarse pointing assembly may primarily provide a large pointing range of possible directions while the fine pointing assembly or other arrangement may primarily provide a large pointing precision of the overall pointing function.

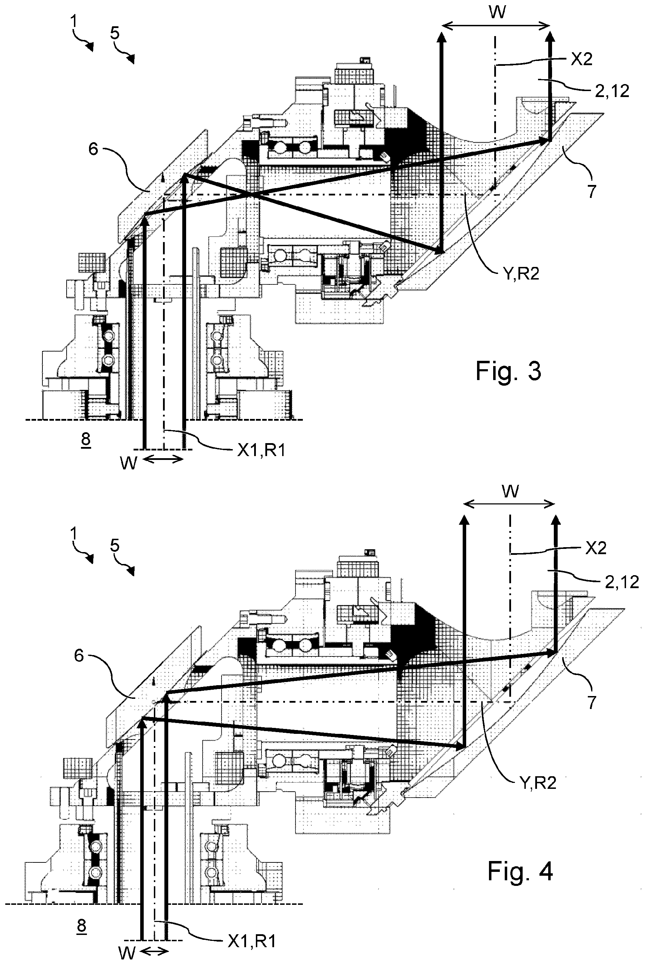

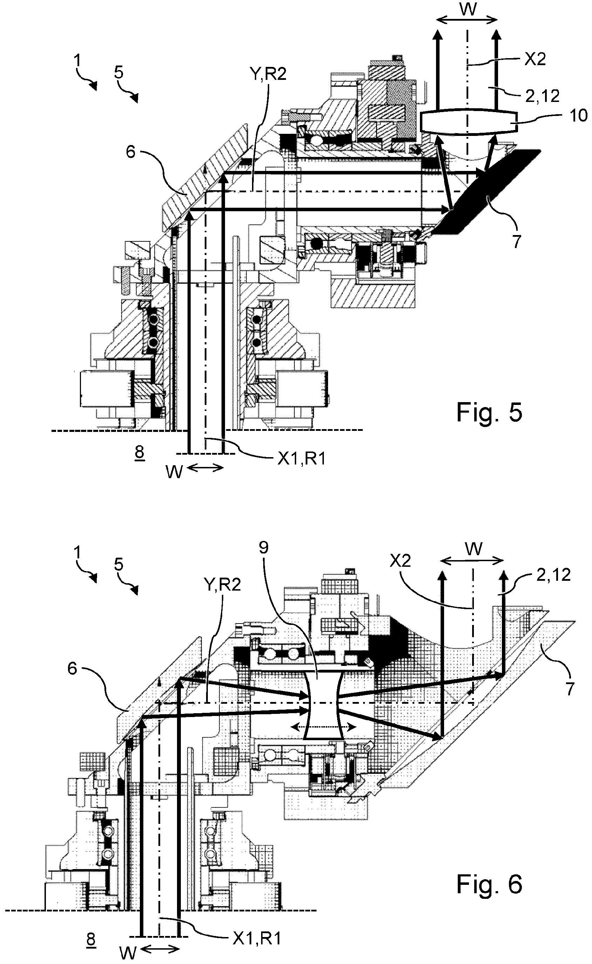

Contrary to assemblies as shown in Figs. 1 and 2, a pointing assembly 1 according to the invention, e.g. as shown in Figs. 3-6, is configured, at least selectively configured, to cause at least one change in convergence or divergence of the light beam 2 using, in particular as one or more beam shaping elements, at least one of: the first mirror 6, the second mirror 7, an optional lens 9 in the intermediate optical axis segment Y and an optional lens 10 in the second optical axis segment X2. In embodiments, including in the examples shown in Figs. 3-6, the pointing assembly 1 is configured to cause at least two such changes, in particular at different positions along the path of the light beam 2. Specifically, in each of Figs. 3 to 5, two such changes in convergence or divergence can be seen, whereas in Fig. 6 four such changes can be seen.

Such causing of at least one change, e.g. two or more changes, in convergence or divergence can be realized in various ways, as is explained further elsewhere herein.

In Figs. 3-6, merely as examples, light beams 2 are shown as outgoing light beams in the form of laser beams 12, originating from within a main body of the vehicle or station which main body forms the aforementioned base 8. The shown outgoing laser light beams 12 are shown as substantially collimated at the first and second optical axis segments X1, X2. Such an outgoing laser light beam may e.g. convey data to a remote laser communication terminal or be used for laser ranging. It shall be appreciated that alternatively or additionally a laser light beam, e.g. a substantially collimated laser light beam, may come into the vehicle or station, i.e. going in a reverse direction compared to what is shown in Figs. 3-6, e.g. to convey data from a remote laser communication terminal. Further alternatively, e.g. in the context of an observation unit, a non-laser light beam such as a converging light beam may come into the vehicle or station, e.g. as explained elsewhere herein with reference to Fig. 8.

In embodiments, including in the examples shown in Figs. 3-6, at least one of the first mirror 6 and the second mirror 7 is a curved mirror.

Advantageously, such a curved mirror may combine a function of directing the light beam 2 to a different one of the optical axis segments X1, Y and X2, with a function of causing a change in convergence or divergence of the light beam 2 at said mirror. Thus, two different optical functions that were traditionally provided by two different optical elements, e.g. a rotatable mirror and a lens, can now be provided by a single optical element in the form of a rotatable curved mirror as the described controllably rotatable first or second mirror, allowing savings in size, mass and complexity. A curved mirror is sometimes also referred to as a powered mirror, with the term 'powered' here being used in the sense of having a non-zero positive or negative optical power, similar to e.g. a lens.

In embodiments, including in the examples shown in Figs. 3, 4 and 6, each of the first mirror 6 and the second mirror 7 is a curved mirror.

In this way, the above described benefits of providing a curved mirror can be used to advantage at both the first mirror and the second mirror. Moreover, a beam expander arrangement can thereby be provided, in particular without necessarily requiring any lens. In case each of the first mirror 6 and the second mirror 7 is a curved mirror, the intermediate optical axis segment Y and/or the second optical axis segment X2 may thus be free from any lens, which may be preferred in some cases, e.g. to reduce the number of components and/or to reduce weight. Nevertheless, a lens may still provide additional functionality, e.g. as explained elsewhere herein with reference to Fig. 6.

In embodiments, including in the examples shown in Figs. 3 and 6, each of the first mirror 6 and the second mirror 7 is a concave mirror.

Such concave mirrors can cause the light beam 2 to become more convergent, i.e. causing or increasing its convergence, or reducing or eliminating its divergence. When the first mirror 6 and the second mirror 7 are each concave, the light beam 2 may converge and subsequently diverge along the intermediate optical axis segment Y, e.g. passing through a focal point as in Fig. 3 or through an intermediate concave lens as in Fig. 6. In this way, a relatively large beam width W may be possible at the second mirror 7 without requiring excessive width along the intermediate optical axis segment Y and/or along the first optical axis segment X1.

In embodiments, including in the example shown in Fig. 4, the first mirror 6 is a convex mirror, wherein the second mirror 7 is a concave mirror.

A convex mirror can cause the light beam 2 to become more divergent, i.e. causing or increasing its divergence, or reducing or eliminating its convergence. It is considered that when the first mirror 6 is convex and the second mirror 7 is concave, the pointing assembly 1 may be optically relatively robust against small distortions that may arise from a drive mechanism that may be used in controllably rotating the second mirror 7 with respect to the first mirror 6 about the second rotation axis R2. The optical robustness is considered to be associated with a relatively small convergence or divergence angle of the light beam 2 along the intermediate optical axis segment Y, e.g. as compared to a configuration as shown in Fig. 3. Furthermore, such an arrangement of curved mirrors can potentially also shorten the space needed to expand the beam, and can help to reduce optical aberrations in case the angle of entry of the light beam is somewhat perturbed.

In embodiments, including in the examples shown in Figs. 3-6, at least one of the first mirror 6 and the second mirror 7 has a focal point aligned with at least one of the first, intermediate and second optical axis segments X1, Y, X2. In embodiments, the first mirror 6 has a focal point aligned with the first optical axis segment X1 and/or a focal point aligned with the intermediate optical axis segment Y. In embodiments, the second mirror 7 has a focal point aligned with the second optical axis segment X2 and/or a focal point aligned with the intermediate optical axis segment Y.

In this way, the respective mirror can change the convergence or divergence of the light beam in a substantially symmetric way with respect to the involved optical axis segment or axes. Such symmetry may for example facilitate pointing of the beam without causing aberrations. In the present context, a focal point is considered aligned with an optical axis segment when the focal point is on an infinite line defined by that optical axis segment, i.e. either on the optical axis segment itself or on a linear extension of the optical axis segment.

In embodiments, each of the first mirror 6 and the second mirror 7 has a respective focal point aligned with the intermediate optical axis segment Y, wherein the two focal points are preferably at a substantially same axial position along the direction of the intermediate optical axis segment.

Such an arrangement can advantageously facilitate beam expansion with little or no change in collimation level.

In embodiments, including in the examples shown in Figs. 3-6, at least one of the first and second mirrors 6, 7 has a parabolic shape, in particular being configured as an off-axis parabolic mirror.

Such a type of curved mirror is known as such and is particularly suitable for changing the convergence or divergence of the light beam in the present context.

In embodiments, including in the example shown in Fig. 6, at least one intermediate-optical-axis-segment lens 9 is arranged between the first mirror 6 and the second mirror 7 along the intermediate optical axis segment Y.

Such a lens 9 can advantageously change the convergence or divergence of the light beam 2 between the first and second mirrors 6,7. Traditional pointing assemblies are free from such lenses, even though some space is typically available in them where such a lens could be arranged. So, such a lens can advantageously provide additional optical functionality with little or no overall size increase. The intermediate-optical-axis-segment lens 9 can be a convex lens, e.g. as in Fig. 6. Alternatively, the intermediate-optical-axis-segment lens can be a concave lens. Further alternatively, the at least one intermediate-optical-axis-segment lens may comprise multiple lenses, e.g. including a convex lens and a concave lens. Although Fig. 6 shows the intermediate-optical-axis-segment lens 9 in combination with concave curved mirrors as first and second mirrors 6,7, it shall be appreciated that any or both of the first and second mirrors 6,7 could alternatively be convex curved or be flat.

In embodiments, including in the example shown in Fig. 6, a position of the at least one intermediate-optical-axis-segment lens 9 is controllably adjustable along the intermediate optical axis segment Y.

In this way, a controllable integrated beam adjustment function can be provided, for example when the at least one intermediate-optical-axis-segment lens 9 is or comprises a convex lens and the first and second mirror 6,7 are each in the form of a concave mirror, e.g. as in Fig. 6. For example, as the intermediate-optical-axis-segment lens 9 is shifted away from the second mirror 7 and more towards the first mirror 6, a net increase in the beam width W of a beam 2 in outgoing direction may be made larger, and vice versa. Thus, in case of an outgoing beam, the beam width at the second optical axis segment X2 may be controllable relative to the beam width at the first optical axis segment X1, so that a controllable integrated beam expander function may be realized. Similarly, in case of an incoming beam in the context of observation, the beam convergence at the first optical axis segment X1 may thus be controllable relatively to the beam convergence at the second optical axis segment X2. Advantageously, the pointing assembly 1 may thus provide a controllable variable zooming arrangement In the context of an observation unit, such a controllable variable zooming arrangement can provide, or at least contribute to, a controllable zooming function for imaging purposes.

In embodiments, including in the example shown in Fig. 5, at least one second-optical-axis-segment lens 10 is arranged along the second optical axis segment X2.

Such a lens can advantageously change the convergence or divergence of the light beam 2 along the second optical axis segment X2, i.e. at an exterior end of the optical path formed by the pointing assembly 1. In this way, the light beam 2 may have a relatively high collimation level and a relatively small width W along the intermediate optical axis segment Y, allowing a relatively compact yet optically robust configuration of the mirror arrangement 5.

In embodiments, including in the example shown in Fig. 5, the second mirror 7 is a convex mirror, wherein preferably the at least one second-optical-axis-segment lens 10 is a convex lens.

In this way, advantageously, a beam expander function can be realized substantially at the exterior end of the optical path, allowing the remaining parts of the pointing assembly to be particularly compact since only a relatively narrow beam passage may be needed along the first optical axis segment X1 and the intermediate optical axis segment Y.

In embodiments, the at least one change in convergence or divergence results in a net difference in convergence or divergence of the light beam 2 at the first optical axis segment X1 compared to at the second optical axis segment X2.

Such a net difference may be particularly useful in the context of observation such as optical telescopic observation using the pointing assembly, see e.g. Fig. 8.

In embodiments, including in the examples shown in Figs. 3-6, the at least one change in convergence or divergence results in a same collimation level of the light beam 2 at the first optical axis segment X1 compared to at the second optical axis segment X2.

Maintaining a collimation level, in particular a high collimation level, can be particularly desirable in the context of laser communication. It shall be appreciated that the maintenance of a collimation level of a light beam generally does not exclude that a beam width W of the same light beam may be changed, as is indeed preferred in case of a beam expander arrangement and can be seen in Figs. 3 - 6 as examples.

In embodiments, including in the examples shown in Figs. 3-6, the at least one change in convergence or divergence results in a different beam width W of the light beam 2 at the first optical axis segment X1 compared to at the second optical axis segment X2, in particular with a smaller beam width along the first optical axis segment X1 and a larger beam width along the second optical axis segment X2.

A beam expander function may thus be provided. Depending on a relative direction of the light beam, this function may result in either an increase or a decrease in the beam width of the light beam.

A maintenance of collimation level, in particular a high collimation level, in combination with a change of beam width may be particularly useful in the context of laser communication using a laser beam 12 with a preferably high collimation level, e.g. as illustrated in Fig. 7. For realizing such a combination of functions, it is preferred that the pointing assembly 1 is configured, at least selectively configured, to cause at least two changes in convergence or divergence of the light beam 2, as may be understood from the examples of Figs. 3 - 6: in this way, the light beam 2 may be caused to converge or diverge substantially only along an intermediate section along its path, allowing the change in beam width substantially without a net change in collimation level outside said intermediate section.

Although the invention has been explained herein using examples of embodiments and drawings, these do not limit the scope of the invention as defined by the claims. Many variations, combinations and extensions are possible, as will be appreciated by the skilled person having the benefit of the present disclosure. For example, laser communication may be performed between on the one hand a vehicle or station having a pointing assembly according to the invention and on the other hand a vehicle or station not having a pointing assembly according to the invention, for example having a traditional pointing assembly instead. As a further example, a vehicle or station may comprise a traditional pointing assembly, for example in addition to a pointing assembly according to the invention. All such variants are considered included within the scope of the invention as defined by the claims.

### LIST OF REFERENCE SIGNS

- 1.: Pointing assembly
- 2.: Light beam
- 3.: Vehicle
- 4.: Station
- 5.: Mirror arrangement
- 6.: First mirror
- 7.: Second mirror
- 8.: Base
- 9.: Intermediate-optical-axis-segment lens
- 10.: Second-optical-axis-segment lens
- 11.: Laser communication assembly
- 12.: Laser beam
- 13.: Observation assembly
- 14.: Ground
- R1.: First rotation axis
- R2.: Second rotation axis
- W.: Beam width
- X1.: First optical axis segment
- X2.: Second optical axis segment
- Y.: Intermediate optical axis segment

## Claims

1. Pointing assembly (1) for controllably directing a light beam (2) into and/or out from a vehicle (3) or station (4) between a first optical axis segment (X1) and a second optical axis segment (X2), the second optical axis segment (X2) mainly extending external to the vehicle (3) or station (4) and being controllably variable with respect to the first optical axis segment (X1),
wherein the pointing assembly (1) comprises a mirror arrangement (5) for directing the light beam (2), the mirror arrangement (5) having a first mirror (6) and a second mirror (7) mutually spaced apart along an intermediate optical axis segment (Y),
wherein the first mirror (6) connects the intermediate optical axis segment (Y) with the first optical axis segment (X1), wherein the second mirror (7) connects the intermediate optical axis segment (Y) with the second optical axis segment (X2), wherein the first mirror (6) and the second mirror (7) are each angled with respect to the intermediate optical axis segment (Y) so that each of the first and second optical axis segments (X1, X2) is substantially transverse to the intermediate optical axis segment (Y),
wherein the pointing assembly (1) is mountable on a base (8) of the vehicle (3) or station (4) such that the first mirror (6) and the second mirror (7) are together controllably rotatable with respect to the base (8) about a first rotation axis (R1) substantially coinciding with the first optical axis segment (X1), so as to enable control of a direction of the intermediate optical axis segment (Y) with respect to the base (8),
wherein the second mirror (7) is controllably rotatable with respect to the first mirror (6) about a second rotation axis (R2) substantially coinciding with the intermediate optical axis segment (Y), so as to enable control of a direction of the second optical axis segment (X2) with respect to the first mirror (6),
**characterized in that**
the pointing assembly (1) is at least selectively configured to cause at least one change in convergence or divergence of the light beam (2) using, in particular as one or more beam shaping elements, at least one of: the first mirror (6), the second mirror (7), an optional lens in the intermediate optical axis segment (Y) and an optional lens in the second optical axis segment (X2).

2. Pointing assembly according to claim 1, wherein at least one of the first mirror (6) and the second mirror (7) is a curved mirror.

3. Pointing assembly according to claim 2, wherein each of the first mirror (6) and the second mirror (7) is a curved mirror.

4. Pointing assembly according to claim 3, wherein each of the first mirror (6) and the second mirror (7) is a concave mirror.

5. Pointing assembly according to claim 3, wherein the first mirror (6) is a convex mirror, wherein the second mirror (7) is a concave mirror.

6. Pointing assembly according to any of claims 2-5, wherein at least one of the first mirror (6) and the second mirror (7) has a focal point aligned with at least one of the first, intermediate and second optical axis segments (X1, Y, X2).

7. Pointing assembly according to any of claims 2-6, wherein at least one of the first and second mirrors (6, 7) has a parabolic shape, in particular being configured as an off-axis parabolic mirror.

8. Pointing assembly according to any of the preceding claims, wherein at least one intermediate-optical-axis-segment lens (9) is arranged between the first mirror (6) and the second mirror (7) along the intermediate optical axis segment (Y).

9. Pointing assembly according to claim 8, wherein a position of the at least one intermediate-optical-axis-segment lens (9) is controllably adjustable along the intermediate optical axis segment (Y).

10. Pointing assembly according to any of the preceding claims, wherein at least one second-optical-axis-segment lens (10) is arranged along the second optical axis segment (X2).

11. Pointing assembly according to claim 10, wherein the second mirror (7) is a convex mirror, wherein the at least one second-optical-axis-segment lens (10) is a convex lens.

12. Pointing assembly according to any of the preceding claims, wherein the at least one change in convergence or divergence results in a different beam width (W) of the light beam (2) at the first optical axis segment (X1) compared to at the second optical axis segment (X2), in particular with a smaller beam width along the first optical axis segment (X1) and a larger beam width along the second optical axis segment (X2).

13. Pointing assembly according to any of the preceding claims, wherein the at least one change in convergence or divergence results in a net difference in convergence or divergence of the light beam (2) at the first optical axis segment (X1) compared to at the second optical axis segment (X2).

14. Pointing assembly according to any of claims 1 - 12, wherein the at least one change in convergence or divergence results in a same collimation level of the light beam (2) at the first optical axis segment (X1) compared to at the second optical axis segment (X2).

15. Laser communication assembly (11) for a vehicle (3) or station (4) serving as a laser communication terminal, comprising a pointing assembly (1) according to any of the preceding claims, in particular for directing a laser beam (12) going out from or into the laser communication assembly (11) for communication with a remote further laser communication terminal.

16. Observation assembly (13) for a vehicle (3) or station (4) serving as an observation unit, comprising a pointing assembly (1) according to any of claims 1 - 14, in particular for directing a light beam (2) into the observation assembly (13) for optical observation.

17. Vehicle (3) or station (4) comprising a laser communication assembly (11) according to claim 15, and/or an observation assembly (13) according to claim 16.

18. Vehicle or station according to claim 17, wherein the vehicle (3) or station (4) is at least one of a satellite, an aircraft, a spacecraft, a ground based vehicle, a space station and a ground station.

19. Vehicle or station according to claim 17 or 18, wherein the pointing assembly (1) is arranged as a coarse pointing assembly, wherein preferably the vehicle (3) or station (4) additionally comprises a fine pointing assembly.

20. Use of a pointing assembly (1) according to any of claims 1- 14 for controllably directing a light beam (2) into and/or out from a vehicle (3) or station (4), in particular for laser communication and/or for observation.

21. Use according to claim 20, wherein the at least one change in convergence or divergence results in:
- a smaller beam width (W) of the light beam (2) at the first optical axis segment (X1) compared to at the second optical axis segment (X2); and/or
- a same collimation level of the light beam (2) at the first optical axis segment (X1) compared to at the second optical axis segment (X2),
in particular for laser communication using a laser beam (12) with a preferably high collimation level.

22. Use according to claim 20, wherein the at least one change in convergence or divergence results in a net difference in convergence or divergence of the light beam (2) at the first optical axis segment (X1) compared to at the second optical axis segment (X2), in particular for observation.
